# EUROPEAN PATENT SPECIFICATION

(11) **EP 4 117 412 B1**
(45) Date of publication and mention of the grant of the patent: **03.12.2025**
(21) Application number: 21711235.8
(22) Date of filing: 12.03.2021
(51) Int. Cl.: A01B 79/00, A01M 7/00

(54) **AGRICULTURAL DEVICE AND METHOD FOR DISPENSING A LIQUID**
LANDWIRTSCHAFTLICHES GERÄT UND VERFAHREN ZUR ABGABE EINER FLÜSSIGKEIT
DISPOSITIF AGRICOLE ET PROCÉDÉ DE DISTRIBUTION DE LIQUIDE

(30) Priority: 13.03.2020 NL 2025129
(43) Date of publication of application: 18.01.2023
(73) Proprietor: Exel Industries, 51200 Epernay (FR)
(72) Inventor: BLAAUW, Doeko, 8332 JA Steenwijk (NL); KAMPMAN, Hendrikus, 0186 Pretoria Waverley (ZA)
(74) Representative: Arnold & Siedsma
(86) International application number: PCT/EP2021/056375
(87) International publication number: WO 2021/180946

(56) References cited:
- EP-A1- 3 269 241
- EP-A1- 3 510 862
- WO-A1-89/10050
- DE-A1- 3 316 919
- US-A1- 2016 120 118
- US-A1- 2019 311 198

## Description

The present invention relates to an agricultural device for dispensing a liquid and a method for dispensing a liquid product using such a device over a surface to be sprayed, such as an agricultural field. The present invention is applicable in the agricultural field in order to spray a field with, for example, a liquid phytosanitary product, such as a fertilizer, a pesticide, or other type.

Agricultural devices for dispensing a liquid over a surface of a field, such as an agricultural field, are known from practice. Such devices comprise a spraying system, said system comprising a spray boom or, in short, a boom comprising a number of consecutive ducts for transporting the liquid to be dispensed. The consecutive ducts together form a longitudinal supply line from a liquid product supply to spray nozzles.

During operation, liquid product is extracted from a product supply, such as a storage tank, and subsequently pumped by a spraying pump via the longitudinal supply lines formed by the ducts to the spray nozzles, or nozzles.

The spray nozzles are configured to dispense the liquid product on a target in reach of a nozzle spraying range, which can be formed by plants (including crops and weeds), that are positioned on an agricultural field that is to be sprayed. Alternatively or additionally, the nozzles are configured to dispense the liquid product on a particular location in reach of a nozzle spraying range of the agricultural field. Often, the distance between the nozzles and the targeted object is approximately 25 cm, 37.5 cm, or 50 cm to obtain a good spraying result. It will be understood that the distance between the nozzles and the targeted object might be any suitable distance between the nozzles and the plants.

In order to reduce both the environmental impact and the costs involved with spraying fields, a need has arisen to increase control over the amount and location of the liquid that is to be dispensed. Therefore, agricultural devices are often equipped with systems to control the amount of liquid to be sprayed on a field. Document US 2016/120118 A1 discloses a spraying system including a first tank containing water, a plurality of vessels containing substances and, a second tank containing a mixed solution formed from the first tank and a substance from the plurality of vessels, the system further comprising means for spraying the mixed solution.

A problem with these conventional agricultural devices is that the liquid to be sprayed is mixed with liquid additive(s) before spraying. This requires an estimate of the required liquid(s) and often excessive liquid has to be removed from the device. This is ineffective, costly, and not very sustainable. This problem is especially prevalent in modem agricultural devices which are configured to spray crops or weeds based on determined or detected plant characteristics, such as crop type, weed type, crop health, number of crops, crop size, weed size, and any other relevant plant information, and wherein the amount of liquid to be sprayed is not known in advance.

The present invention has for its objective to obviate or at least reduce the aforementioned problems.

Therefore, the invention provides an agricultural device according to claim 1.

It will be understood that the terms such as spraying target, spraying object, dispensing target etc. will be used interchangeable in the context of the invention. It will be further understood that a mixture of the liquid to be sprayed and the liquid additive can be referred to as: the mixture, the mixed liquid, the mixture to be sprayed, the liquid sprayed on the field, or the liquid for spraying the field. It will also be understood that said terms will be used interchangeable in the context of the invention.

Preferably, the spraying system of the agricultural device further comprises a spraying control unit including at least one nozzle control unit that is configured for controlling the opening and closing of one or more associated nozzles to dispense liquid.

An advantage of the device according to the invention is that by having the dosing pump, which is configured to add a predetermined dose of the liquid additive into the liquid to be sprayed, it is no longer necessary to mix the liquid to be sprayed with the liquid additive in advance. This has as an advantage that the amount of mixed liquid left over after spraying is significantly reduced. This is cost effective and more sustainable compared to conventional devices. It will be
understood that the liquid to be sprayed may comprise any liquid appropriate to be used as a base liquid for spraying a field, such as, for example, (tab) water, ground water, or a pre-mixed base liquid, or any other liquid appropriate to be used as liquid to be sprayed. It will be
understood that the liquid to be sprayed can also be derived from mixing a concentrate substance or a powdered substance with an appropriate mixing liquid such as (tab) water.

It will be further understood that the liquid additive may comprise any liquid additive appropriate to be mixed with the base liquid, for example, a pesticide concentrate, such as an herbicide, a fungicide, or an insecticide; a liquid fertilizer; or any other liquid crop treatment concentrate. It will be understood that the liquid additive might also be derived by mixing a powder or concentrate with an appropriate mixing liquid.

It is noted that the dosing pump is operatively coupled to the longitudinal supply line, preferably via a first supply line. This has the effect that the liquid additive is added before the spraying pump and both the liquid to be sprayed and the liquid additive are pumped through the spraying pump, which has as an advantage that the mixture will be more homogeneous.

It is further noted that the parts of the dosing pump which come in contact with the liquid additive are preferably made from a material which does not react with the liquid additive such as suitable metals, for example stainless steel; polymers from the fluoropolymer family, for example, polytetrafluoroethylene (PTFE), polyvinylidene fluoride or polyvinylidene difluoride (PVDF); and/or fluoroelastomer materials, such as a material from the FKM family containing vinylidene fluoride as a monomer. It will be understood that the invention is not limited to the materials listed above, but that the materials listed are merely presented as example.

In an embodiment according to the invention, the longitudinal supply line comprises a recirculation line and/or the agricultural device further comprises a pressure regulator configured to ensure a relative constant spraying pressure in the longitudinal supply line during operation of the agricultural device. Preferably, the spraying control unit is configured to control the amount of mixture that is sprayed by opening and closing of one or more nozzles and wherein the spraying pressure is a predetermined pressure.

By having a recirculation line in which the mixture to be sprayed is under a relative constant pressure, the liquid product will be sprayed by the nozzles under relative constant pressure. This has the effect that a droplet size of the liquid product that is sprayed is relatively constant. The advantage of having a relatively constant droplet size is that the droplets are sprayed with a higher accuracy, for example by the droplets being more uniform in size, the size can be adjusted to be less susceptible to drift.

In a further presently preferred embodiment according to the invention, each of the nozzles has a corresponding nozzle controller/nozzle control unit configured to control the opening and closing of the nozzle based on a required quantity of mixed liquid to be sprayed at the spraying range corresponding to the nozzle.

In a further embodiment the pressure regulator might be operatively connected to a spraying control unit, wherein the spraying control unit is configured to adjust the spraying pressure based on a type of mixed liquid to be sprayed, type of liquid additive, driving speed, amount of liquid to be sprayed, plant characteristics, and/or user preferences.

In an embodiment according to the invention, the spraying system further comprises a dosing pump controller, configured to calculate the predetermined dose of the liquid additive based on an amount of the liquid to be sprayed and a predetermined mixture ratio.

It will be understood that the predetermined mixture ratio comprises a ratio between the liquid to be sprayed and the liquid additive and that the ratio determines a potency of the mixture.

It will be further understood that the amount of the liquid to be sprayed, may be measured in (milli-) liters of liquid sprayed per minute, (milli-) liters of liquid sprayed per hectare, or (milli-) liters of liquid sprayed per plant.

When spraying a field, the amount of liquid to be sprayed might vary depending on, for example, the condition of the field, crop type, plant characteristics, plant health, driving speed, number of weeds, type of liquid to be sprayed, type of liquid additive, etc.

By having a dosing pump controller, configured to calculate the predetermined dose of the liquid additive based on an amount of the liquid to be sprayed and a predetermined mixture ratio, it is possible to adjust the dose of liquid additive added to the liquid to be sprayed. This has as an advantage that the liquid sprayed on the field confirms to the predetermined mixture ratio, independent of the amount of liquid that is sprayed on a given moment. This further optimizes the effective use of a liquid additive such that costs are decreased and sustainability is increased.

In a further embodiment according to the invention the dosing pump controller is operatively connected to the spraying pump and. configured to retrieve the amount of liquid to be sprayed by observing the pump rate of the spraying pump and/or the opening and closing of the nozzles.

An advantage of the dosing pump controller being operatively connected to the spraying pump to retrieve the amount of liquid to be sprayed, is that the amount of liquid to be sprayed can be obtained in a simple manner, without the need of additional sensors, such as flow sensors.

In an alternative further embodiment the dosing pump controller is operatively connected to one or more flow sensors configured to measure a flow of mixed liquid to be sprayed in the longitudinal supply line, wherein the measured flow corresponds to a quantity of mixed liquid that is sprayed, and wherein the dosing pump controller is further configured to further calculate the predetermined dose of the liquid additive based on the measured quantity of mixed liquid that is sprayed.

Deviations may occur between the amount of the liquid to be sprayed and the quantity of liquid that is (actually) sprayed. This might result unforeseen changes the potency of the mixture. By measuring the quantity of mixed liquid that is sprayed, the dose of liquid additive calculated by the dosing pump controller is based on a more precise quantity. This has as advantage that a more accurate dose of liquid additive is determined, without said deviations influencing the potency of the mixture.

In an optional further embodiment, the connection between the dosing pump controller and the spraying pump comprises a connection between the dosing pump controller and a spraying pump controller. Optionally, the spraying pump controller and dosing pump controller are comprised in one general pump controller. This reduces the number of components.

In another embodiment according to the invention, the dosing pump controller is operatively connected to the spraying control unit that is configured for controlling the opening and closing of one or more associated nozzles to dispense liquid, and wherein the dosing pump controller is configured to retrieve the amount of liquid to be sprayed from the spraying control unit. Preferably, the spraying control unit is further operatively connected to the spraying pump controller.

An advantage of operatively connecting the dosing pump controller and the spraying control unit is that the dosing pump controller can directly and thus faster, anticipate on the opening and closing of one or more associated nozzles and adapt the dosing accordingly.

In an embodiment according to the invention, the agricultural device comprises a flow rate sensor configured to measure the flow rate of liquid to be sprayed, wherein the dosing pump is operatively connected to the flow rate sensor and configured to retrieve the amount of liquid to be sprayed from the flow rate sensor.

It is noted that the flow sensor can also comprise multiple flow sensors placed at different locations and which sum of measured flow rates comprises the flow rate of liquid to be sprayed.

An advantage of having a flow rate sensor connected to the dosing pump controller is that the dose can be adapted to the actual flow of liquid. This means that the actual flow does not have to be calculated by observing the flow rate indirectly.

In an embodiment according to the invention, the agricultural device further comprises a ratio control unit configured to enable a user of the agricultural device to set the predetermined mixing ratio of the dosing pump controller.

An advantage of having a ratio control unit is that the ratio between the liquid to be sprayed and the liquid additive can be controlled. This enables the user of the agricultural device to control the potency of the mixture that is sprayed. This has as an advantageous effect that the agricultural device can be used on a wide range of type of fields and type of crops.

In a further embodiment according to the invention, the agricultural device further comprises:
- a positioning system that is configured to provide position data, wherein the position data comprises a real-time position of the agricultural device;
- a memory with a map containing field information stored thereon,
wherein the ratio control unit is further configured to receive the position data and field information and set or further adjust the predetermined mixing ratio based on the field information corresponding to the position data.

It is noted that the field information stored on the memory may be stored thereon in advance, before working the field. Alternatively, the field information may be retrieved via a wireless communication unit, such as a GSM communication unit or a Wireless Local Area Network communication unit. Furthermore, the retrieving may occur on demand based on position data of the device.

It is also noted that the positioning system may be any positioning system, for example, Global Positioning System (GPS), Assisted GPS (A-GPS), global navigation satellite system (GNSS), a local positioning system, or any other suitable positioning system.

It is further noted that the field information might comprise information about a type of the crop on the field; an age of the crop on the field; other crop characteristics such as health, size etcetera; soil type; soil condition information; soil nutrition information; soil composition information; weed information; groundwater level information; weather information, such as wind speed or rain predictions; or any other information relevant when spraying a field.

By configuring the ratio control unit to receive the position data and field information and to set or further adjust the predetermined mixing ratio based thereupon, it is possible to automatically adjust the ratio, and thus the strength or potency of the liquid sprayed on the field.

This has as an advantage that a less potent dose is used when applicable, instead of spraying with a default mixing ratio. For example, when a field has parts where the crop is relatively healthy, a less potent dose can be used, thus using less liquid additive, resulting in lower running cost and lower environmental impact.

A further advantage is that the ratio can be adjusted according to situations in or near the field. For example, when spraying near a pond or river, the ratio can be adjusted such that a less potent dose is used, thus lessening the environmental impact on the water quality of the pond or river. In another example, the ratio can be adjusted to use a more potent dose in case of strong winds. This enables the user to deliver the same amount of liquid additive, to the field, while using a lesser amount of liquid to be sprayed and therefore being less subjective to liquid blowing away by the wind.

In an embodiment according to the invention, the agricultural device further comprises a detection system that is positioned on the boom and/or in front of the agricultural device and is configured to provide detection data comprising information on the surface to be sprayed to the dosing pump controller, preferably, wherein the detection system is connected with the ratio control unit, and wherein the ratio control unit is further configured to adjust or set the determined mixing ratio based on the detection data.

An advantage is that by providing the dosing pump controller with detection data, the ratio between liquid to be sprayed and liquid additive can be adjusted on the fly, based on the detection information. In fact, this enables a (semi-) continue adjustment of the ratio. This further reduces cost and improves sustainability.

In a further embodiment the detection information comprises plant characteristics and/or information regarding the field to be sprayed.

It is noted that plant characteristics can comprise information about individual crops or weeds in front of the agricultural device. Detection information may further comprise information regarding the field to be sprayed, such as soil composition, soil hydration information and other relevant soil information. It is also noted that the detection information may further comprise other information relevant to spraying the field.

An advantage is that by providing the dosing pump controller with detected plant characteristics, the ratio between liquid to be sprayed and liquid additive can be adjusted on the fly, based on information of individual plants. This allows, for example, to give a plant, which has been detected to have a growth deficiency, a higher concentration of liquid fertilizer. **In** fact, this further enables a (semi-) continue adjustment of the ratio. This further reduces cost and improves sustainability.

In an embodiment according to the invention, the dosing pump is a piston pump.

An advantage of having a piston pump as dosing pump is that a piston pump offers a relative precise control of the dose of liquid additive. Thus, the amount of liquid additive added to the liquid to be sprayed can be controlled with a high accuracy having only small deviations from the required dose.

In a further embodiment, the piston pump comprises an axial piston pump with one or more pistons and an adjustable control plate configured for controlling the stroke of the one or more pistons.

It is noted that by controlling the stroke of a piston, a quantity of fluid moved by the piston can be varied effectively.

By having an axial piston pump with one or more and an adjustable control plate configured for controlling the stroke of the one or more pistons, the amount of liquid additive added can be controlled by both varying the pump speed by controlling the rotational speed of the axis as well as by controlling the stroke of the one or more pistons. This has the effect that a high dosing accuracy over a large range of quantities of liquid additive is reached, with an average error margin of less than 10% in a pump range between 15 milliliters per minute and 15,000 milliliters per minute and, preferably an average error margin of less than 5% in a pump range between 40 milliliters per minute and 15,000 milliliters per minute. It is noted that the error margin comprises a percentage in difference between the required quantity of liquid additive supplied by the dosing pump and the actual quantity of liquid additive supplied by the dosing pump.

The advantage of having a low error margin over the pump range between 40 milliliters per minute and 15,000 milliliters per minute is that the agricultural device can accurately deliver a dose of the mixed liquid with the required quantity and potency in a large variety of use cases. This is important, since the required dose and potency can vary widely depending on a combination of factors comprising a driving speed of the agricultural device, a plant density on the field, a type of plants on the field, a size of plants on the field, a health of plants on the field, an amount of weeds on the field, a type of mixed product to be sprayed, a soil composition of the field, weather during operation, a weather report, the number of nozzles on the boom, etc.

For example, the required quantity of mixed liquid to be sprayed might vary between about 0.3 liters per hectare to about 15 liters per hectare depending on the product to be sprayed. The driving speed of the agricultural device during spraying may vary between 2 km/h to 35 km/h. The number of nozzles being opened on a given moment might vary between one nozzle being open to two-hundred nozzles being open. As all the factors above independently influence the amount of liquid that is sprayed on a given moment, the amount of liquid that is sprayed may show a large variation during operation. This emphasizes the advantage of having a low error margin over the pump range between 40 milliliters per minute and 15,000 milliliters per minute.

It will be clear that the ranges given above for the factors influencing the amount of liquid that is sprayed are exemplary numbers that do not in any way limit the invention.

In an embodiment according to the invention, the piston comprises a piston head and a piston rod that are pivotally connected.

By pivotally connecting the piston rod and piston head is that the piston head, a center line of the piston head will be about parallel to the stroke of the piston during operation of the pump. This has as an advantage that the piston head will make a tight seal with a corresponding piston chamber, independent to any adjustments made to the stroke of the piston. By having a tight seal between the piston head and corresponding piston chamber a dosing higher accuracy can be obtained, preferably with an error margin less than 7.5%, more preferably less than 3%.

In an embodiment according to the invention, the piston pump further comprises a pump house configured for housing the one or more pistons, the piston pump further comprising a stationary end plate with an inlet opening and an outlet opening.

In a further embodiment according to the invention, the piston pump further comprises a compression element configured for pressing the pump house against the stationary end plate. An advantage of the compression element is that a tighter seal between the stationary end plate and the pump house is achieved, resulting in a higher pump accuracy.

In an embodiment according to the invention, the agricultural device further comprises a buffer tank, coupled between the first supply line and the spraying pump and a liquid supply pump coupled between the liquid product supply and the buffer tank, wherein the dosing pump is connected to the buffer tank.

In use of the agricultural device, the buffer tank can be filled with the spraying mixture by the liquid supply pump and the dosing pump to a predetermined maximum level, after which the spraying pump can pump the spraying mixture to the nozzles for spraying the field. When a predetermined minimum level is reached, the buffer tank is filled again by the liquid supply pump and the dosing pump.

An advantage of having a buffer tank is that the buffer tank can hold a relative small amount of the mixture of liquid to be sprayed and liquid additive with the predetermined mixing ratio, without the need for a dosing pump with a very high accuracy in a large range. Instead, a dosing pump with a high accuracy in a relative small range can be used.

This has the advantage of having fewer waste products after spraying.

In one of the presently preferred embodiments the buffer tank has a maximum capacity between 50 and 250 liters, preferably about 100 liters.

In another preferred embodiment, the buffer tank has a buffer tank controller, configured to control the dosing pump and liquid supply pump and further configured to keep the mixture of liquid to be sprayed in the buffer tank between a predetermined minimum amount of mixture to be sprayed and a predetermined maximum amount of liquid to be sprayed.

In a further preferred embodiment, the minimum amount of mixture to be sprayed and the maximum amount of liquid to be sprayed are based on a type of mixed liquid to be sprayed, type of liquid additive, driving speed, amount of liquid to be sprayed, plant characteristics, and/or user preferences.

The advantage of basing the minimum and maximum amount of liquid to be sprayed is that the quantity of liquid in the buffer tank can be adapted to fit different scenarios or situations. This has the effect that the maximum amount of mixture to be sprayed in the buffer tank, can be kept as low as possible given the different scenarios or situations. This limits the amount of liquid left over in the spraying system after spraying; further reducing cost of spraying and limiting the environmental impact.

In a further embodiment, the buffer tank comprises a mixing element configured to mix the liquid additive and liquid to be sprayed.

This has the advantage that the mixture to be sprayed will be a more homogeneous mixture.

In an embodiment according to the invention, the dosing pump is a first dosing pump and the device further comprises a second dosing pump, wherein the first dosing pump is configured to have a high accuracy in a first dosing range and wherein the second dosing pump is configured to have a high accuracy in a second dosing range, wherein a dosing range is a range of quantities of liquid in which the pump can supply liquid within a certain error margin.

An advantage of having a first and a second dosing pump with different dosing range is that a high dosing accuracy can be obtained over a larger dosing quantity range. For example, when a dose within the first dosing range is required, the dose is supplied by the first dosing pump; and, when a dose within the second dosing range is required, the dose is supplied by the second dosing pump. In another example, the two dosing pumps work together to supply a required dose within the first range, the second range, or a sum thereof.

In an embodiment according to the invention, the agricultural device further comprises a cleaning system that is operatively coupled with the longitudinal supply line or treatment tank and configured to flush the spraying system.

Preferably, the cleaning system comprises a cleaning fluid inlet and a cleaning fluid outlet and is configured to flush the spraying system of any residue (mixed) spraying fluid or liquid additive by using a cleaning fluid.

An advantage of having a cleaning system is that residue spraying fluids are flushed out. This is especially important when the agricultural device is used to spray different kind of plant treatment fluids, which might cause a chemical reaction when being mixed.

It is noted that the dosing pump according to any of the embodiments can also be produced or provided separately from the agricultural device.

The invention further also relates to a method according to claim 13 for dispensing a liquid product to be sprayed over a surface, such as an agricultural field.

The method according to the invention provides similar effects and advantages as the device according to the invention. More specifically, the method according to the invention allows mixing the liquid additive and the liquid to be sprayed according to some demand for the mixed liquid.

In an embodiment of the method according to the invention, the step of determining the dose of liquid additive comprises determining the dose of liquid additive according to an amount of liquid to be sprayed and a predetermined mixing ratio.

An advantage of adjusting the dose of liquid additive according to an amount of liquid to be sprayed and a predetermined mixing ratio is that the potency of the mixed liquid will stay about equal during spraying, independent of the amount of liquid to be sprayed on a given moment.

In an embodiment of the method according to the invention, the method further comprises the step of obtaining one or more of a position data, a field information and/or a plant characteristics, and the step of determining the predetermined mixing ratio in response to the one or more of the position data, the field information and/or the plant characteristics.

An advantage of obtaining one or more of a position data, a field information and/or a plant characteristics and adjusting the predetermined mixing ratio, is that the potency of the mixed liquid can be adjusted according to different situations encountered when spraying a field. Further advantages, features and details of the invention are elucidated on the basis of preferred embodiments thereof, wherein reference is made to the accompanying drawings, in which:
- Figure 1 shows a perspective view of an example of an agricultural device according to the invention;
- Figure 2 shows an example of different components of the device of figure 1;
- Figure 3 shows an example of the different components of the spraying system of the device of figure 1;
- Figure 4 shows an example of the dosing pump of the device of figure 1; and
- Figure 5 shows the device of figure 1 during operation in a field.

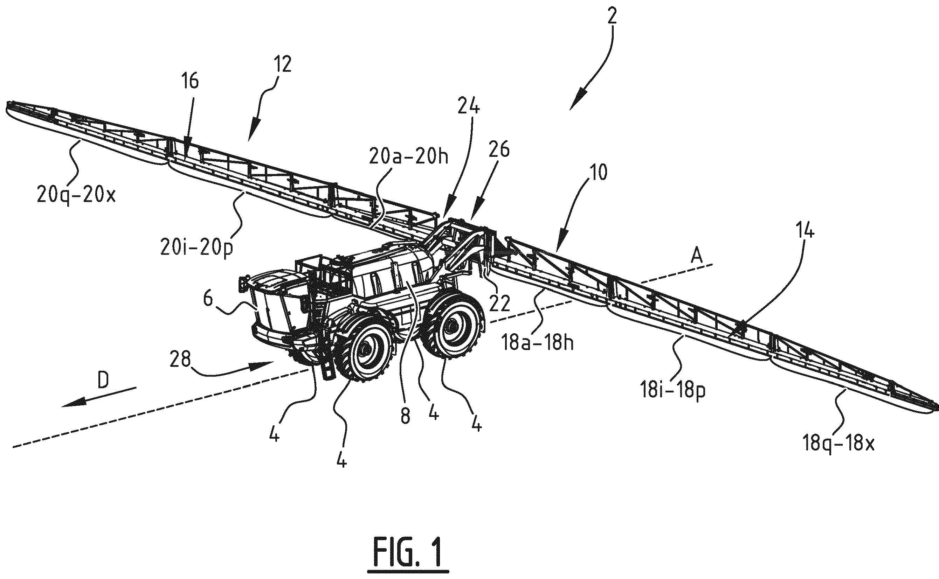

Agricultural device 2 according to an example of the invention (figure 1) shows self-propelled device 2 that is provided with wheels 4 that are connected to a drive assembly (not shown) and with driver cabin 6 from which an operator can control agricultural device 2. Agricultural device 2 further comprises storage tank 8 in which liquid product to be sprayed over a surface is provided. In this example, agricultural device 2 comprises two booms 10, 12. Boom 10 is provided with longitudinal supply line 14 and a plurality of nozzles 18a - 18x which are distributed along boom 10. Each of the nozzles 18a - 18x is fluidly connected with longitudinal supply line 14 of boom 10m which longitudinal supply line 14 has end portion 22 that is fluidly connected with the spraying pump (not shown).

Boom 12 is provided with longitudinal supply line 16 and a plurality of nozzles 20a - 20x which are distributed along boom 12. Each of the nozzles 20a - 20x is fluidly connected with longitudinal supply line 16 of boom 12, which longitudinal supply line 16 has end portion 24 that is fluidly connected with the spraying pump (not shown).

In the illustrated example, boom 10, 12 each are foldable between a storage position (not shown) and an active spray position (figure 1). In the active position, booms 10, 12 extend outwardly on opposite sides from the agricultural device 2. In this position, booms 10, 12 extend substantially perpendicular to a central axis A that extends substantially parallel to moving direction D of device 2 from rear end 26 to front end 28 of device 2. In the storage position, each of booms 10, 12 is rotated inwardly over an angle of about 90° and folded, such that in this embodiment each of booms 10, 12 extends at least partially parallel to central axis A of agricultural device 2.

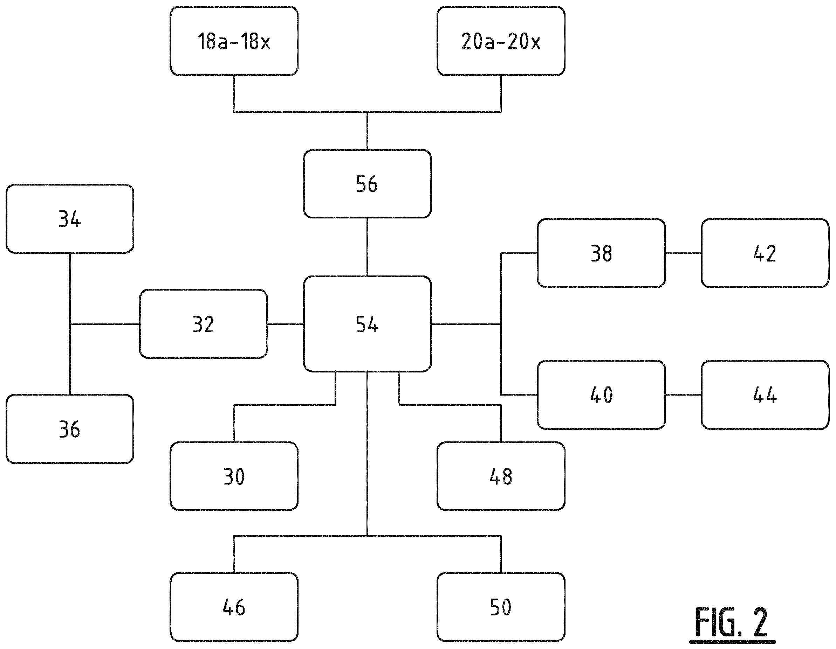

In the illustrated embodiment agricultural device 2 further comprises spraying control unit 54 with associated controller (figure 2) connected to at least one nozzle control unit 56 to control the opening and closing of one or more of associated nozzles 18a - 18x, 20a - 20x on respective booms 10, 12.

Agricultural device further comprises spraying pump controller 38 for controlling spraying pump 42, and dosing pump controller 40 for controlling the dosing pump 44. Spraying pump controller 38 and dosing pump controller 40 are in this embodiment both connected with spraying control unit 54 to receive the desired or requested amount of liquid to be sprayed and the associated dose of the liquid additive respectively.

In the illustrated embodiment agricultural device 2 further comprises positioning system 30 that is configured to provide real-time position data to the device, most notably to spraying control unit 54 and/or nozzle control unit 56, that is used in calculating which of nozzles 18a-18x, 20a-20x needs to be operated at a specific time to dispense liquid on the field.

In the illustrated embodiment agricultural device 2 also comprises detection system 32 that includes one or more cameras 34 and image processor 36 for processing the images captured with cameras 34. The processed images are and/ore data subsequently sent from image processor 36 or detection system 32 to spraying control unit 54 and/or nozzle control unit 56 to further determine which of nozzles 18a-18x, 20a-20x needs to be operated based on information provided by the detection system. Spraying control unit 54 is optionally further configured to send a required dosing strength to the dosing pump controller 40 based on the detection information from detection system 32 and/or flow information from one or more flow sensors (not shown).

In the illustrated embodiment (figure 2) device 2 also comprises communication device 46 that is operatively connected to spraying control unit 54 and, thus, indirectly nozzle control unit 56, spraying pump controller 38 and dosing pump controller 40, and user interface 48 that is configured to enable a user or operator to provide input and control device 2. The operator may follow the operations on display 50, on which in this example the specific information on the operation of the different nozzles, required dosing strength and amount of mixed liquid to be sprayed at different times is represented. Naturally, other information regarding the operation of agricultural device 2 may also be provided on display 50.

It will be understood that agricultural device 2 may comprise different components that can be operatively connected. It will be further understood that the connections shown in figure 2 are an example and that different connections and connection hierarchy may exist.

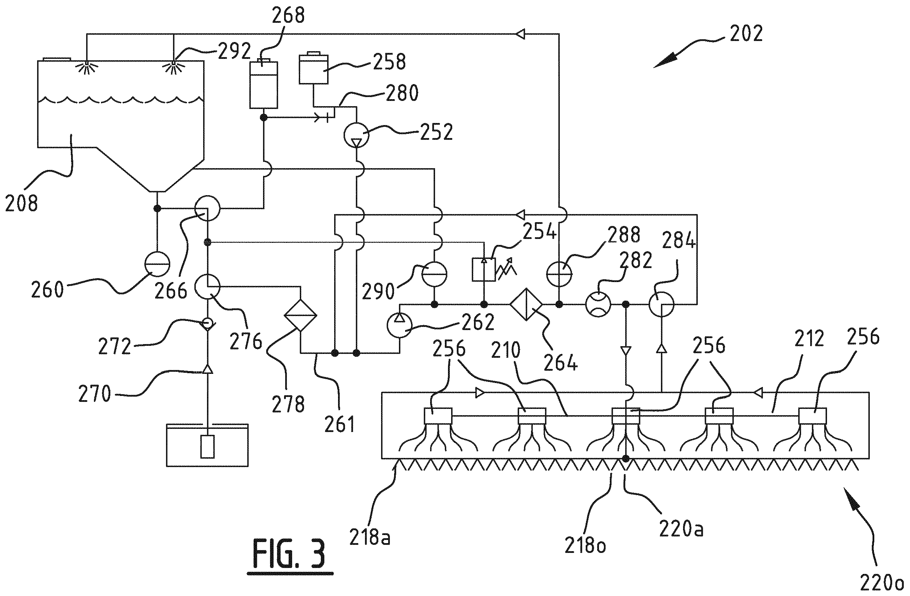

In an illustrated embodiment (figure 3) spraying system 202 of agricultural device 2 in one or more alternative embodiments of the invention comprises a liquid product supply comprising storage tank 208 connected via first supply line 261 with spraying pump 262 which is configured to pump liquid to be sprayed to spraying nozzles 218a - 218o, 202a-220o positioned along booms 210, 212. Agricultural device 2 further comprises treatment tank 258 connected to dosing pump 252. Dosing pump 252 is configured to inject liquid additive in first supply line 261 between storage tank 208 and spraying pump 262. Nozzle control units 256 are configured to control the opening and closing of spraying nozzles 218a - 218o, 202a-220o during agricultural device. Alternatively, each of the nozzles 218a - 218o, 202a-220o comprises a corresponding nozzle controller, for example a Pulse Width Modulation-valve (PWM-valve), to control the opening and closing of the corresponding nozzle 218a - 218o, 202a-220o. Agricultural device further comprises pressure regulator 254, optionally including a spraying control unit, configured to ensure a relative constant pressure between spraying pump 262 and nozzle control units - 256. Flow sensor 282 is operatively connected to spraying control unit 54 and configured to measurer the amount of mixed liquid being sprayed.

Preferably, agricultural device comprises pressure filter 264 between spraying pump 262 and nozzle control units 256 to further ensure a homogeneous mixture to be sprayed.

During operation, for example spraying a field, liquid to be sprayed is pumped from storage tank 208 by spraying pump 262 to spraying nozzles 218a - 218o, 202a-220o. During spraying, liquid additive from treatment tank 258 is added to the liquid to be sprayed by dosing pump 252, to obtain a mixed liquid to be sprayed.

In operation, treatment tank 258 is preferably situated above dosing pump 252, such that the liquid additive more easily enters dosing pump 252 due to gravity working on the liquid additive.

The opening and closing of spraying nozzles 218a - 218o, 202a-220o is controlled by nozzle control units 256, for example depending on a quantity of mixed liquid to be sprayed on a certain location.

In this embodiment storage tank 208 comprises tank drain valve 260 to drain storage tank 208 of any liquid to be sprayed left in the tank after use.

In this embodiment agricultural device 2 further comprises filling valve 276 for switching the inlet of spraying pump 262 between the storage tank 208 and suction hose 270 for filling up storage tank 208 by using spraying pump 262 to suck liquid to be sprayed from a supply via tank filling valve 290 to storage tank 208. To ensure liquid does not accidently flows from agricultural device to the supply suction hose 270 preferably comprises non return valve 272. To filter the liquid being sucked up, agricultural device 2 preferably comprises suction filter 278.

In this embodiment, agricultural device 2 further optionally comprises clean fluid tank 268 connected between treatment tank 258 and injection pump 252 with injection pump cleaning coupling 280, and further connected between storage tank 208 and spraying pump 262 with tank selection valve 266. Storage tank 208 is connected downstream to spraying pump 262 via cleaning valve 288 to clean storage tank 208 using cleaning nozzles 292. In operation, agricultural device 2 can be flushed by pumping liquid from the clean fluid tank with the spraying pump a dosing pump to clean the entire system.

In this embodiment agricultural device 2 comprises circulation valve 284 such that liquid can be pumped through different components of the agricultural device without liquid being sprayed from the spraying nozzles 218a - 218o, 202a-220o, for example, when flushing the device during cleaning.

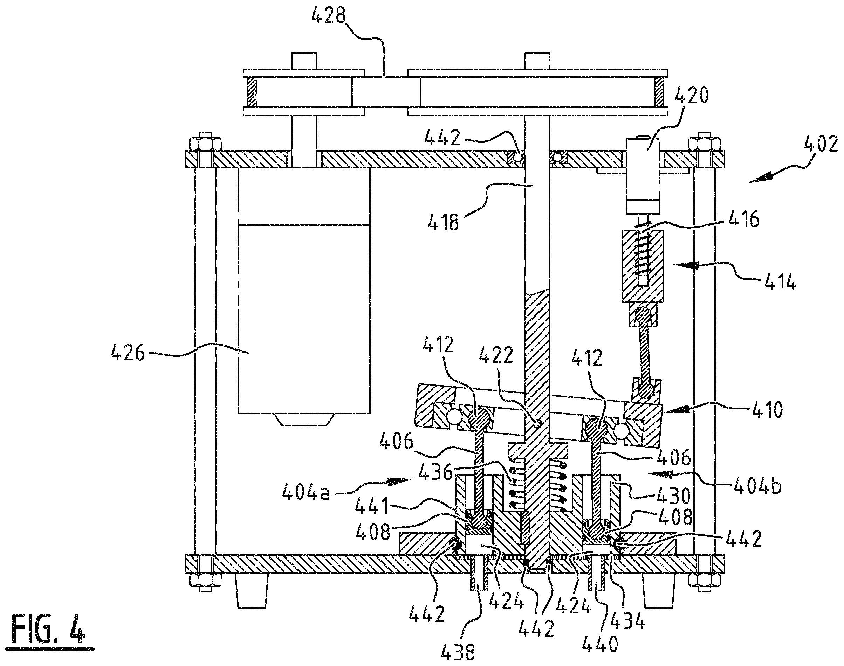

In a presently preferred embodiment dosing pump 402 (figure 4), that is an embodiment of dosing pump 252, comprises pistons 404a, 404b connected to adjustable control plate 410 with ball joint 412. Adjustable control plate 410 is pivotally connected to axle 418 at pivot 422. When adjustable control plate 410 is in a neutral position, i.e. not pivoted, the plate is about perpendicular with axle 418. It is noted that in the presented figure for clarity two pistons are visualized. However, embodiments with one or more pistons are also included in the invention.

Pivot 422 between adjustable control plate 410 and axle 418 is controlled by stroke controller 414 by pressing adjustable control plate 410. The amount with which stroke controller 414 presses against adjustable control plate 410 is adjustable via stroke control motor 420. Stroke control motor 420 is connected via threaded connection 416 to stroke controller 414.

During operation, when stroke control motor 420 rotates, threaded connection 416 will move stroke controller 414, resulting in a change in pivot of the adjustable control plate 410.

Dosing pump motor 426 is configured to drive axle 418 via belt drive 428 to rotate piston house 430 and adjustable control plate 410. It is noted that other drive mechanism are included in the invention, such as a direct drive, a chain drive, a geared drive or any other suitable drive between dosing pump motor 426 and drive axle 418.

Rotational elements 442 ensure axle 418, piston house 430, and adjustable control plate 410 are rotatable.

It is noted that in this embodiment stroke controller 414 rubs against adjustable control plate 410 when the adjustable control plate 410 is rotated. It will be understood that different (alternative) connections are possible which will let adjustable control plate 410 rotate relative to stroke controller 414.

Piston house 430 wears against stationary end plate 434 by spring 436. Stationary end plate 434 comprises inlet opening 438 and outlet opening 440. Piston house 430, pistons 404a, 404b and, stationary plate 434 define piston chambers 424.

It is noted that the parts of the dosing pump 252 which come in contact with the liquid additive are preferably made from a material which does not react with the liquid additive. In this example, piston house 430 comprises stainless steel; stationary end plate 434 comprises a PTFE layer on which the piston house wears; the pistons are made from PVDF and possible one or more seals (not shown) in the dosing pump 252 are made from a fluoroelastomer. It will be clear that other suitable combinations of materials are envisioned and included in the invention. Piston house 430 might for example (partly) made from PVDF.

In this embodiment, pistons 404a, 404b comprise piston shaft 406 and piston head 408 connected with a ball joint, such that piston head 408 will (better) seal piston chamber 424. Piston head 408 further comprises seals 441 configured to seal piston chamber 424 even further.

In operation, dose pump motor 426 will drive adjustable control plate 410 and pump house 430 via axle 418 and belt drive 428. By pivoting adjustable control plate 410 pistons 404a, 404b will move up and down in piston house 430 such that:
- the piston opposite to inlet opening 438 will be making an upwards stroke, thereby enlarging the piston chamber 424 and making liquid additive enter piston chamber 424; and,
- the piston opposite to the outlet opening 440 will make a downward stroke, making piston chamber 424 smaller and pushing liquid additive out of piston chamber 424.

By pivoting adjustable control plate 410 the stroke of pistons 404a, 404b (and therewith the amount of liquid additive dispensed by dosing pump 402) is controlled. It is hereby noted that when adjustable control plate 410 is about perpendicular to axle 418, the stroke of pistons 404a, 404b is about zero and virtually no liquid additive will be dispensed.

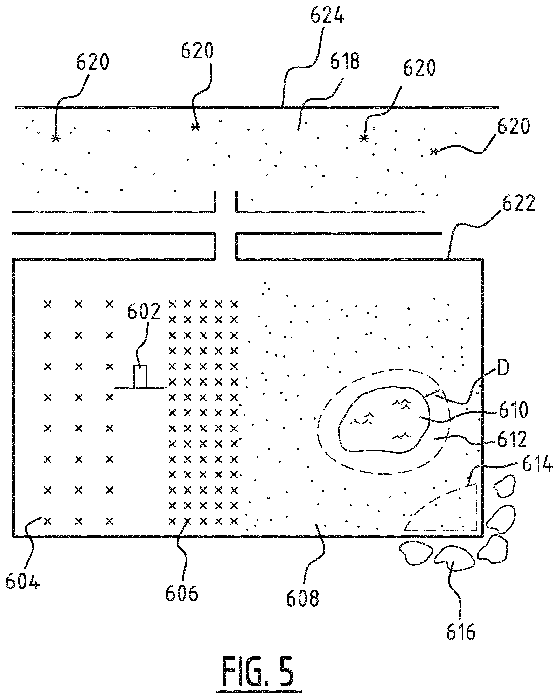

During operation agricultural device 2 (figure 5) can be adjusted automatically and/or by an operator to adjust to different situations when spraying a field. Field 622 contains first crop 604, 606 wherein the distance between the crops 604 is relative large compared to the distance between crops 606. Agricultural device 2 automatically adjusts the dosing rate of spraying system 202 of agricultural device 2 based on position information and field information, such that first crop 604 is sprayed with a dose of 5 liters liquid additive per squared kilometers of field and that first crop 606 is sprayed with a dose of 15 liters liquid additive per squared kilometers of field, for example. Field 622 further comprises second crop 608, which in general needs a dose of 10 liters liquid additive per squared kilometers of field. During operation, the operator drives the agricultural device 602 within distance D from pond 610 and temporarily lowers the dose of liquid additive in area 612 to protect water quality of pond 610. During operation, the operator also drives in area 614 in which crop 608 is affected by mold due to shade of the trees 616 and configures the dosing pump to spray a dose of 20 liters of liquid additive per squared kilometers of field in area 614 to combat the mold.

Field 624 contains both crop 618 and weed 620. The operator drives agricultural device 2 in field 624. The detection system of agricultural device 2 detects weed 620 and controls the spraying nozzles to deliver a dose of herbicide on the detected locations, whereby the potency of the herbicide is adjusted by controlling dosing pump 252, 402, according to a detected size of the weed.

## Claims

1. Agricultural device (2) for dispensing a liquid product to be sprayed over a surface, such as an agricultural field, the agricultural device (2) comprising a spraying system (202) comprising:
- at least one boom (10, 12, 210, 212) comprising a longitudinal supply line for transporting the liquid product and a plurality of nozzles (18a - 18x, 20a - 20x, 218a - 218o, 202a-220o) that are positioned along the boom (10, 12, 210, 212), wherein each nozzle (18a - 18x, 20a - 20x, 218a - 218o, 202a-220o) is operatively connected to the longitudinal supply line (14, 261);
- a liquid product supply that is operatively connected to the longitudinal supply line (14, 261) for supplying to the longitudinal supply line (14, 261) the liquid to be sprayed, and comprising a supply tank (8, 208) with an inlet and an outlet;
- a spraying pump (42, 262) operatively coupled with the outlet of the supply tank (8, 208) and coupled with the longitudinal supply line (14, 261);
wherein the spraying system (202) further comprises:
- a treatment tank (258) for holding a liquid additive, comprising a treatment inlet and a treatment outlet;
- a dosing pump (44, 252) operatively coupled with the treatment outlet and further operatively coupled to the longitudinal supply line (14, 261), wherein the dosing pump (44, 252) is configured to add a predetermined dose of the liquid additive into the liquid to be sprayed,
**characterized in that** the spraying system (202) further comprises a dosing pump controller (40), configured to calculate the predetermined dose of the liquid additive based on an amount of the liquid to be sprayed and a predetermined mixture ratio, and
wherein the dosing pump controller (40) is operatively connected to the spraying pump (42, 262) and configured to retrieve the amount of liquid to be sprayed by observing the pump rate of the spraying pump (42, 262).

2. Agricultural device (2) according to claim 1, wherein the dosing pump controller (40) is operatively connected to a spraying control unit (54) that is configured for controlling the opening and closing of one or more associated nozzles (18a - 18x, 20a - 20x) to dispense liquid, and wherein the dosing pump controller (40) is configured to retrieve the amount of liquid to be sprayed from the spraying control unit (54).

3. Agricultural device (2) according to claim 2, wherein the agricultural device (2) comprises a flow rate sensor configured to measure the flow rate of liquid to be sprayed, wherein the dosing pump is operatively connected to the flow rate sensor and configured to retrieve the amount of liquid to be sprayed from the flow rate sensor.

4. Agricultural device (2) according to any one of the foregoing claims 2 or 3, further comprising a ratio control unit configured to enable a user of the agricultural device (2) to set the predetermined mixing ratio of the dosing pump controller (40).

5. Agricultural device (2) according to claim 4, further comprising:
- a positioning system (30) that is configured to provide position data, wherein the position data comprises a real-time position of the agricultural device (2);
- a memory with a map containing field information stored thereon;
wherein the ratio control unit is further configured to receive the position data and field information and set or further adjust the predetermined mixing ratio based on the field information corresponding to the position data.

6. Agricultural device (2) according to any one of the claims 2 - 5, wherein the device (2) further comprises a detection system (32) that is positioned on the boom (10, 12, 210, 212) and/or in front of the agricultural device (2) and is configured to provide detection data comprising information on the surface to be sprayed to the dosing pump controller (40); and preferably wherein the detection data comprises plant characteristics.

7. Agricultural device (2) according to any one of the previous claims, wherein the dosing pump (44, 252) is a piston pump.

8. Agricultural device according to claim 7, wherein the piston pump comprises an axial piston pump with one or more pistons and an adjustable control plate configured for controlling the stroke of the one or more pistons.

9. Agricultural device (2) according to claim 7 or 8, wherein the piston pump comprises a piston head and a piston rod that are pivotally connected.

10. Agricultural device (2) according to any one of the claims 7 - 9, the piston pump further comprises a pump house configured for housing the one or more pistons, the piston pump further comprising a stationary end plate with an inlet opening and an outlet opening, and a compression element configured for pressing the pump house against the stationary end plate.

11. Agricultural device (2) according to any one of the previous claims, further comprising:
- a buffer tank, coupled between a first supply line (14, 261) and the spraying pump (42, 262), and a liquid supply pump coupled between the liquid product supply and the buffer tank and/or
- a cleaning system and configured to flush the spraying system (202).

12. Agricultural device (2) according to any one of the previous claims, wherein the dosing pump (44, 252) is a first dosing pump and the device (2) further comprises a second dosing pump, wherein the first dosing pump is configured to have a high accuracy in a first dosing range and wherein the second dosing pump is configured to have a high accuracy in a second dosing range.

13. Method for dispensing a liquid product to be sprayed over a surface, such as an agricultural field, the method comprising the steps of:
- providing an agricultural device (2) according to any one of the claims 1 - 12;
- determining a dose of liquid additive;
- mixing the liquid additive in the liquid supply line (14, 261) of the agricultural device (2) with a liquid to be sprayed to obtain a mixed liquid; and
- dispensing the mixed liquid to be sprayed over the surface with the agricultural device (2).

14. Method according to claim 13, wherein the step of determining the dose of liquid additive comprises determining the dose of liquid additive according to an amount of liquid to be sprayed and a predetermined mixing ratio.

15. Method according to claim 13 or 14, further comprising the step of obtaining one or more of a position data, a field information and/or a plant characteristics, and the step of determining the predetermined mixing ratio in response to the one or more of the position data, the field information and/or the plant characteristics.

## Patentansprüche

1. Landwirtschaftliche Vorrichtung (2) zum Abgeben eines Flüssigprodukts, das über eine Oberfläche, wie ein landwirtschaftliches Feld, gesprüht werden soll, die landwirtschaftliche Vorrichtung (2) umfassend ein Sprühsystem (202), umfassend:
- mindestens einen Ausleger (10, 12, 210, 212), umfassend eine Längsversorgungsleitung zum Transportieren des Flüssigprodukts und eine Vielzahl von Düsen (18a - 18x, 20a - 20x, 218a - 218o, 202a - 220o), die entlang des Auslegers (10, 12, 210, 212) positioniert sind, wobei jede Düse (18a - 18x, 20a - 20x, 218a - 218o, 202a - 220o) mit der Längsversorgungsleitung (14, 261) wirkverbunden ist;
- eine Flüssigproduktversorgung, die mit der Längsversorgungsleitung (14, 261) wirkverbunden ist, zum Versorgen der Längsversorgungsleitung (14, 261) mit der Flüssigkeit, die gesprüht werden soll, und umfassend einen Versorgungstank (8, 208) mit einem Einlass und einem Auslass;
- eine Sprühpumpe (42, 262), die mit dem Auslass des Vorratstanks (8, 208) wirkgekoppelt ist, und mit der Längsversorgungsleitung (14, 261) gekoppelt ist;
wobei das Sprühsystem (202) ferner umfasst:
- einen Behandlungstank (258) zum Halten eines Flüssigadditivs, umfassend einen Behandlungseinlass und einen Behandlungsauslass;
- eine Dosierpumpe (44, 252), die mit dem Behandlungsauslass wirkgekoppelt ist, und ferner mit der Längsversorgungsleitung (14, 261) wirkgekoppelt ist, wobei die Dosierpumpe (44, 252) konfiguriert ist, um eine vorbestimmte Dosis des Flüssigadditivs der Flüssigkeit, die gesprüht werden soll, hinzuzufügen,
**dadurch gekennzeichnet, dass** das Sprühsystem (202) ferner eine Dosierpumpensteuerung (40) umfasst, die konfiguriert ist, um die vorbestimmte Dosis des Flüssigadditivs basierend auf einer Menge der Flüssigkeit, die gesprüht werden soll, und einem vorbestimmten Mischungsverhältnis zu berechnen, und
wobei die Dosierpumpensteuerung (40) mit der Sprühpumpe (42, 262) wirkverbunden und konfiguriert ist, um die Menge an Flüssigkeit, die gesprüht werden soll, durch Beobachten der Pumprate der Sprühpumpe (42, 262) abzurufen.

2. Landwirtschaftliche Vorrichtung (2) nach Anspruch 1, wobei die Dosierpumpensteuerung (40) mit einer Sprühsteuereinheit (54) wirkverbunden ist, die zum Steuern des Öffnens und Schließens einer oder mehrerer zugehöriger Düsen (18a - 18x, 20a - 20x), um Flüssigkeit abzugeben, konfiguriert ist, und wobei die Dosierpumpensteuerung (40) konfiguriert ist, um die Menge an Flüssigkeit, die von der Sprühsteuereinheit (54) gesprüht werden soll, abzurufen.

3. Landwirtschaftliche Vorrichtung (2) nach Anspruch 2, wobei die landwirtschaftliche Vorrichtung (2) einen Durchflusssensor umfasst, der konfiguriert ist, um die Durchflussrate der Flüssigkeit, die gesprüht werden soll, zu messen, wobei die Dosierpumpe mit dem Durchflusssensor wirkverbunden ist und konfiguriert ist, um die Menge an Flüssigkeit, die gesprüht werden soll, von dem Durchflusssensor abzurufen.

4. Landwirtschaftliche Vorrichtung (2) nach einem der vorstehenden Ansprüche 2 oder 3, ferner umfassend eine Verhältnissteuereinheit, die konfiguriert ist, um es einem Benutzer der landwirtschaftlichen Vorrichtung (2) zu ermöglichen das vorbestimmte Mischungsverhältnis der Dosierpumpensteuerung (40) einzustellen.

5. Landwirtschaftliche Vorrichtung (2) nach Anspruch 4, ferner umfassend:
- ein Positionierungssystem (30), das konfiguriert ist, um Positionsdaten bereitzustellen, wobei die Positionsdaten eine Echtzeitposition der landwirtschaftlichen Vorrichtung (2) umfassen;
- einen Speicher mit einer Karte, die darauf gespeicherte Feldinformationen enthält;
wobei die Verhältnissteuereinheit ferner konfiguriert ist, um die Positionsdaten und Feldinformationen zu empfangen und das vorbestimmte Mischungsverhältnis basierend auf den Feldinformationen, die den Positionsdaten entsprechen, einzustellen oder weiter anzupassen.

6. Landwirtschaftliche Vorrichtung (2) nach einem der Ansprüche 2 bis 5, wobei die Vorrichtung (2) ferner ein Erkennungssystem (32) umfasst, das an dem Ausleger (10, 12, 210, 212) und/oder vor der landwirtschaftlichen Vorrichtung (2) positioniert ist und konfiguriert ist, um Erkennungsdaten, umfassend Informationen über die Oberfläche, die gesprüht werden soll, an die Dosierpumpensteuerung (40) bereitzustellen; und vorzugsweise wobei die Erkennungsdaten Pflanzeneigenschaften umfassen.

7. Landwirtschaftliche Vorrichtung (2) nach einem der vorstehenden Ansprüche, wobei die Dosierpumpe (44; 252) eine Kolbenpumpe ist.

8. Landwirtschaftliche Vorrichtung nach Anspruch 7, wobei die Kolbenpumpe eine Axialkolbenpumpe mit einem oder mehreren Kolben und einer einstellbaren Steuerplatte umfasst, die zum Steuern des Hubs des einen oder der mehreren Kolben konfiguriert ist.

9. Landwirtschaftliche Vorrichtung (2) nach Anspruch 7 oder 8, wobei die Kolbenpumpe einen Kolbenkopf und eine Kolbenstange, die schwenkbar verbunden sind, umfasst.

10. Landwirtschaftliche Vorrichtung (2) nach einem der Ansprüche 7 bis 9, wobei die Kolbenpumpe ferner ein Pumpengehäuse umfasst, das zum Unterbringen des einen oder der mehreren Kolben konfiguriert ist, die Kolbenpumpe ferner umfassend eine stationäre Endplatte mit einer Einlassöffnung und einer Auslassöffnung und ein Kompressionselement, das zum Drücken des Pumpengehäuses gegen die stationäre Endplatte konfiguriert ist.

11. Landwirtschaftliche Vorrichtung (2) nach einem der vorstehenden Ansprüche, ferner umfassend:
- einen Puffertank, der zwischen einer ersten Versorgungsleitung (14, 261) und der Sprühpumpe (42, 262) gekoppelt ist, und eine Flüssigkeitsversorgungspumpe, die zwischen der Flüssigproduktversorgung und dem Puffertank gekoppelt ist, und/oder
- ein Reinigungssystem, das konfiguriert ist, um das Sprühsystem (202) zu spülen.

12. Landwirtschaftliche Vorrichtung (2) nach einem der vorstehenden Ansprüche, wobei die Dosierpumpe (44, 252) eine erste Dosierpumpe ist und die Vorrichtung (2) ferner eine zweite Dosierpumpe umfasst, wobei die erste Dosierpumpe konfiguriert ist, um eine hohe Genauigkeit in einem ersten Dosierbereich aufzuweisen und wobei die zweite Dosierpumpe konfiguriert ist, um eine hohe Genauigkeit in einem zweiten Dosierbereich aufzuweisen.

13. Verfahren zum Abgeben eines flüssigen Produkts, das über eine Oberfläche, wie ein landwirtschaftliches Feld gesprüht werden soll, das Verfahren umfassend die Schritte:
- Bereitstellen einer landwirtschaftlichen Vorrichtung (2) nach einem der Ansprüche 1 bis 12;
- Bestimmen einer Dosis von Flüssigadditiv;
- Mischen des Flüssigadditivs in der Flüssigkeitsversorgungsleitung (14, 261) der landwirtschaftlichen Vorrichtung (2) mit einer Flüssigkeit, die gesprüht werden soll, um eine Mischflüssigkeit zu erhalten; und
- Abgeben der Mischflüssigkeit, die über die Oberfläche mit der landwirtschaftlichen Vorrichtung (2) gesprüht werden soll.

14. Verfahren nach Anspruch 13, wobei der Schritt des Bestimmens der Dosis des Flüssigadditivs das Bestimmen der Dosis des Flüssigadditivs gemäß einer Menge an Flüssigkeit, die gesprüht werden soll, und einem vorbestimmten Mischungsverhältnis umfasst.

15. Verfahren nach Anspruch 13 oder 14, ferner umfassend den Schritt des Erhaltens von einem oder mehreren von Positionsdaten, Feldinformationen und/oder Pflanzeneigenschaften und den Schritt des Bestimmens des vorbestimmten Mischungsverhältnisses als Reaktion auf eines oder mehrere von den Positionsdaten, den Feldinformationen und/oder der Pflanzeneigenschaften.

## Revendications

1. Dispositif agricole (2) permettant de distribuer un produit liquide à pulvériser sur une surface, telle qu'un champ agricole, le dispositif agricole (2) comprenant un système de pulvérisation (202) comprenant :
- au moins un bras (10, 12, 210, 212) comprenant une ligne d'alimentation longitudinale permettant de transporter le produit liquide et une pluralité de buses (18a - 18x, 20a - 20x, 218a - 218o, 202a-220o) qui sont positionnées le long du bras (10, 12, 210, 212), dans lequel chaque buse (18a - 18x, 20a - 20x, 218a - 218o, 202a-220o) est fonctionnellement raccordée à la ligne d'alimentation longitudinale (14, 261) ;
- une alimentation en produit liquide qui est fonctionnellement raccordée à la ligne d'alimentation longitudinale (14, 261) permettant d'alimenter à la ligne d'alimentation longitudinale (14, 261) le liquide à pulvériser, et comprenant un réservoir d'alimentation (8, 208) avec une entrée et une sortie ;
- une pompe de pulvérisation (42, 262) accouplée fonctionnellement à la sortie du réservoir d'alimentation (8, 208) et accouplée à la ligne d'alimentation longitudinale (14, 261) ;
dans lequel le système de pulvérisation (202) comprend en outre :
- un réservoir de traitement (258) permettant de retenir un additif liquide, comprenant une entrée de traitement et une sortie de traitement ;
- une pompe doseuse (44, 252) accouplée fonctionnellement à la sortie de traitement et accouplée fonctionnellement en outre à la ligne d'alimentation longitudinale (14, 261), dans lequel la pompe doseuse (44, 252) est conçue pour ajouter une dose prédéterminée de l'additif liquide dans le liquide à pulvériser,
**caractérisé en ce que** le système de pulvérisation (202) comprend en outre un organe de commande de pompe doseuse (40), configuré pour calculer la dose prédéterminée de l'additif liquide en fonction d'une quantité du liquide à pulvériser et d'un rapport de mélange prédéterminé, et
dans lequel l'organe de commande de pompe doseuse (40) est fonctionnellement connecté à la pompe de pulvérisation (42, 262) et configuré pour récupérer la quantité de liquide à pulvériser en observant le débit de pompage de la pompe de pulvérisation (42, 262).

2. Dispositif agricole (2) selon la revendication 1, dans lequel l'organe de commande de pompe doseuse (40) est fonctionnellement connecté à une unité de commande de pulvérisation (54) qui est configurée pour commander l'ouverture et la fermeture d'une ou plusieurs buses (18a - 18x, 20a - 20x) associées pour distribuer du liquide, et dans lequel l'organe de commande de pompe doseuse (40) est configuré pour récupérer la quantité de liquide à pulvériser auprès de l'unité de commande de pulvérisation (54).

3. Dispositif agricole (2) selon la revendication 2, dans lequel le dispositif agricole (2) comprend un capteur de débit d'écoulement configuré pour mesurer le débit d'écoulement de liquide à pulvériser, dans lequel la pompe doseuse est fonctionnellement connectée au capteur de débit d'écoulement et configurée pour récupérer la quantité de liquide à pulvériser auprès du capteur de débit d'écoulement.

4. Dispositif agricole (2) selon l'une quelconque des revendications 2 ou 3 qui précèdent, comprenant en outre une unité de commande de rapport configurée pour permettre à un utilisateur du dispositif agricole (2) de régler le rapport de mélange prédéterminé de l'organe de commande de pompe doseuse (40).

5. Dispositif agricole (2) selon la revendication 4, comprenant en outre :
- un système de positionnement (30) qui est configuré pour fournir des données de position, dans lequel les données de position comprennent une position en temps réel du dispositif agricole (2) ;
- une mémoire avec une carte contenant des informations de champ stockées sur celui-ci ;
dans lequel l'unité de commande de rapport est configurée en outre pour recevoir les données de position et les informations de champ et régler ou ajuster encore le rapport de mélange prédéterminé en fonction des informations de champ correspondant aux données de position.

6. Dispositif agricole (2) selon l'une quelconque des revendications 2 à 5, dans lequel le dispositif (2) comprend en outre un système de détection (32) qui est positionné sur le bras (10, 12, 210, 212) et/ou devant le dispositif agricole (2) et est configuré pour fournir des données de détection comprenant des informations relatives à la surface à pulvériser à l'organe de commande de pompe doseuse (40) ; et de préférence dans lequel les données de détection comprennent des caractéristiques de plantes.

7. Dispositif agricole (2) selon l'une quelconque des revendications précédentes, dans lequel la pompe doseuse (44, 252) est une pompe à piston.

8. Dispositif agricole selon la revendication 7, dans lequel la pompe à piston comprend une pompe à piston axiale avec un ou plusieurs pistons et une plaque de commande ajustable conçue pour commander la course du ou des pistons.

9. Dispositif agricole (2) selon la revendication 7 ou 8, dans lequel la pompe à piston comprend une tête de piston et une tige de piston qui sont reliées de manière pivotante.

10. Dispositif agricole (2) selon l'une quelconque des revendications 7 à 9, la pompe à piston comprend en outre un logement de pompe conçu pour loger le ou les pistons, la pompe à piston comprenant en outre une plaque d'extrémité fixe avec une ouverture d'entrée et une ouverture de sortie, et un élément de compression conçu pour presser le logement de pompe contre la plaque d'extrémité fixe.

11. Dispositif agricole (2) selon l'une quelconque des revendications précédentes comprenant en outre :
- un réservoir tampon, accouplé entre une première ligne d'alimentation (14, 261) et la pompe de pulvérisation (42, 262), et une pompe d'alimentation de liquide accouplée entre l'alimentation en produit liquide et le réservoir tampon et/ou
- un système de nettoyage, et conçu pour rincer le système de pulvérisation (202).

12. Dispositif agricole (2) selon l'une quelconque des revendications précédentes, dans lequel la pompe doseuse (44, 252) est une première pompe doseuse et le dispositif (2) comprend en outre une seconde pompe doseuse, dans lequel la première pompe doseuse est conçue pour avoir une haute précision dans une première plage de dosage et dans lequel la seconde pompe doseuse est conçue pour avoir une haute précision dans une seconde plage de dosage.

13. Procédé permettant de distribuer un produit liquide à pulvériser sur une surface, telle qu'un champ agricole, le procédé comprenant les étapes consistant à :
- fournir un dispositif agricole (2) selon l'une quelconque des revendications 1 à 12 ;
- déterminer une dose d'additif liquide ;
- mélanger l'additif liquide dans la ligne d'alimentation de liquide (14, 261) du dispositif agricole (2) avec un liquide à pulvériser pour obtenir un liquide mélangé ; et
- distribuer le liquide mélangé à pulvériser sur la surface avec le dispositif agricole (2).

14. Procédé selon la revendication 13, dans lequel l'étape de détermination de la dose d'additif liquide comprend la détermination de la dose d'additif liquide selon une quantité de liquide à pulvériser et un rapport de mélange prédéterminé.

15. Procédé selon la revendication 13 ou 14, comprenant en outre l'étape d'obtention d'une ou plusieurs parmi des données de position, des informations de champ et/ou des caractéristiques de plantes, et l'étape de détermination du rapport de mélange prédéterminé en réponse à celle ou celles parmi les données de position, les informations de champ et/ou les caractéristiques de plantes.
